# EUROPEAN PATENT APPLICATION

(11) **EP 4 542 972 A1**
(43) Date of publication of application: **23.04.2025**
(21) Application number: 22951830.3
(22) Date of filing: 14.12.2022
(51) Int. Cl.: H04L 69/14

(54) **COMMUNICATION METHOD AND APPARATUS**

(30) Priority: 18.07.2022 CN 202210841486
(71) Applicant: Huawei Technologies Co., Ltd., Shenzhen, Guangdong 518129 (CN)
(72) Inventor: CAO, Cong, Shenzhen, Guangdong 518129 (CN); ZHANG, Shengjie, Shenzhen, Guangdong 518129 (CN); HUANG, Tao, Shenzhen, Guangdong 518129 (CN)
(74) Representative: Körber, Martin Hans
(86) International application number: PCT/CN2022/138902
(87) International publication number: WO 2024/016573

(57) **Abstract**

Embodiments of this application provide a communication method and apparatus. In the solutions, a transmitting end may first encapsulate, according to a first wireless communication protocol, to-be-transmitted data, then perform encapsulation according to a second wireless communication protocol, and send, by using a wireless communication technology corresponding to the second wireless communication protocol, a data frame finally obtained through encapsulation. Correspondingly, after receiving the data frame by using the wireless communication technology corresponding to the second wireless communication protocol, a receiving end may first decapsulate the data frame according to the second wireless communication protocol, and then perform decapsulation according to the first wireless communication protocol, to obtain the data sent by the transmitting end. According to the solutions, a communication device can integrate two wireless communication technologies to implement data transmission. This can fully utilize advantages of different wireless communication protocols, and further ensure user experience.

## Description

### CROSS-REFERENCE TO RELATED APPLICATIONS

This application claims priority to Chinese Patent Application No. 202210841486.6, filed with the China National Intellectual Property Administration on July 18, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a short-range wireless communication technology is, for example, a Bluetooth (Bluetooth, BT) technology (for example, a common BT technology or a Bluetooth low energy (Bluetooth low energy, BLE) technology), a wireless fidelity (wireless fidelity, Wi-Fi) technology, or a ZigBee (ZigBee) technology.

Various short-range wireless communication technologies (wireless communication technologies for short) lack interoperability at a communication protocol layer; in each wireless communication technology, communication is performed through its respective channel. However, an operating frequency band used by all the wireless communication technologies is an unlicensed frequency band (for example, a 2.4 Hz frequency band). When different wireless communication technologies occupy a same frequency band as an operating frequency band, signal interference is generated between the different wireless communication technologies, and communication efficiency of the different wireless communication technologies is reduced. Therefore, when supporting a plurality of wireless communication technologies, a communication device usually does not perform data transmission by using two or more wireless communication technologies at same time.

However, because the different wireless communication technologies have respective advantages and disadvantages (for example, the BT technology has a low rate and low power consumption, and the Wi-Fi technology has a high bandwidth and high power consumption), the communication device can use only one wireless communication technology for a service at a time. As a result, in some cases, data transmission or running of the communication device is adversely affected, and user experience is reduced.

A wearable device supporting a Bluetooth technology and a Wi-Fi technology is used as an example for description. When the wearable device has a data transmission requirement with a large data amount such as application download or system update, the wearable device selects the Wi-Fi technology for communication, or when the wearable device needs to transmit data with a small data amount such as a notification message or periodic monitored data, the wearable device usually selects the Bluetooth technology for communication. However, low power consumption, a weak signal, and high air interface slot usage often occur in an actual scenario. For example, when the wearable device is in a low power consumption state, communication by using the Wi-Fi technology causes a large amount of power consumption; and when an air interface signal is weak, communication by using the Wi-Fi technology affects data transmission efficiency.

### SUMMARY

This application provides a communication method and apparatus, to implement a transmission mechanism that can integrate different wireless communication technologies.

According to a first aspect, an embodiment of this application provides a communication apparatus. The apparatus is used in a communication device supporting a plurality of wireless communication protocols. The following describes the apparatus by using an example in which a data transmitting end is a first device. The communication apparatus used in the first device includes:
a first communication module, configured to encapsulate, according to a first wireless communication protocol, to-be-transmitted target data, to generate a first data frame; and a second communication module, configured to: obtain the first data frame, and encapsulate the first data frame according to a second wireless communication protocol, to generate a second data frame, where the second wireless communication protocol is different from the first wireless communication protocol; and send the second data frame by using a wireless communication technology corresponding to the second wireless communication protocol.

According to this solution, when two communication devices need to perform data communication, one wireless communication protocol may be used inside the communication devices to perform data processing, and the other wireless communication protocol may be used between the communication devices to perform data transmission. The method can be used to integrate different wireless communication technologies during data transmission, and implement a transmission mechanism that integrates the different wireless communication technologies. According to this mechanism, the communication device can fully utilize advantages of the different wireless communication technologies and advantages of different wireless communication protocols. This finally ensures user experience.

In a possible design, the first communication module is further configured to: send the first data frame to the second communication module by using a share memory share RAM technology or a universal asynchronous receiver/transmitter UART protocol; and when obtaining the first data frame, the second communication module is specifically configured to: obtain the first data frame from the first communication module by using the share RAM technology or the UART protocol.

According to this design, the first communication module and the second communication module may communicate with each other by using the share RAM technology or the UART protocol.

In a possible design, the first communication module is further configured to: determine, based on at least one of the following, to transmit, according to the second wireless communication protocol, the target data carried in the first data frame: channel information corresponding to the first wireless communication protocol, load information of the first communication module, channel information corresponding to the second wireless communication protocol, or load information of the second communication module; and/or the second communication module is further configured to: determine, based on at least one of the following, to transmit, according to the second wireless communication protocol, the target data carried in the first data frame: channel information corresponding to the first wireless communication protocol, load information of the first communication module, channel information corresponding to the second wireless communication protocol, or load information of the second communication module.

According to this design, the first communication module or the second communication module may determine to transmit the target data according to the second wireless communication protocol, to negotiate a communication manner of the target data.

In a possible design, the first data frame is carried in a payload of the second data frame.

In a possible design, the second data frame includes a first frame header, the first frame header carries first information indicating a transmission channel of the first data frame, and the transmission channel is a transmission channel supporting the first wireless communication protocol.

According to this design, a second device that receives the second data frame can learn of that the first data frame carried in the second data frame is transmitted through the transmission channel supporting the first wireless communication protocol, so that the second device can parse the first data frame according to the first wireless communication protocol to obtain the target data.

In a possible design, the first information includes at least one of the following: indication information of the first wireless communication protocol; an identifier of a source device; or an identifier of a destination device.

In a possible design, the first frame header further includes second information indicating a data type of the target data carried in the first data frame.

In some wireless communication protocols, when determining that data of a specific data type (for example, signaling) is received, a physical layer of a device may directly perform a corresponding operation, and does not need to sequentially report the data to a higher layer (for example, an application layer). Therefore, according to this design, when obtaining the first data frame, the second device may determine the data type of the target data based on the second information in the second data frame, and may further perform a corresponding operation based on the data. This can finally avoid a delay caused by reporting the data to a higher layer.

In a possible design, the first wireless communication protocol and the second wireless communication protocol are any one of the following:
a Bluetooth BT protocol, a wireless fidelity Wi-Fi protocol, a ZigBee ZigBee protocol, or a SparkLink protocol.

According to a second aspect, an embodiment of this application provides a communication apparatus. The apparatus is used in a communication device supporting a plurality of wireless communication protocols. The following describes the apparatus by using an example in which a data receiving end is a second device. The communication apparatus used in the second device includes:
a second communication module, configured to: receive a second data frame from a first device by using a wireless communication technology corresponding to a second wireless communication protocol; and decapsulate the second data frame according to the second wireless communication protocol, to obtain a first data frame; and a first communication module, configured to: obtain the first data frame, and decapsulate the first data frame according to a first wireless communication protocol, to obtain target data carried in the first data frame.

According to this solution, when two communication devices need to perform data communication, one wireless communication protocol may be used inside the communication devices to perform data processing, and the other wireless communication protocol may be used between the communication devices to perform data transmission. The method can be used to integrate different wireless communication technologies during data transmission, and implement a transmission mechanism that integrates the different wireless communication technologies. According to this mechanism, the communication device can fully utilize advantages of the different wireless communication technologies and advantages of different wireless communication protocols. This finally ensures user experience.

In a possible design, the second communication module is further configured to: send the first data frame to the first communication module by using a share memory share RAM technology or a universal asynchronous receiver/transmitter UART protocol; and when obtaining the first data frame, the first communication module is specifically configured to: obtain the first data frame from the second communication module by using the share RAM technology or the UART protocol.

According to this design, the first communication module and the second communication module may communicate with each other by using the share RAM technology or the UART protocol.

In a possible design, the first data frame is carried in a payload of the second data frame.

In a possible design, the second data frame includes a first frame header, the first frame header carries first information indicating a transmission channel of the first data frame, and the transmission channel is a transmission channel supporting the first wireless communication protocol; and the second communication module is further configured to: after obtaining the first data frame, send the first data frame to the first communication module based on the first information, so that the first communication module decapsulates the first data frame according to the first wireless communication protocol.

According to this design, the second device can learn of that the first data frame carried in the second data frame is transmitted through the transmission channel supporting the first wireless communication protocol, so that the second device can parse the first data frame according to the first wireless communication protocol to obtain the target data.

In a possible design, the first information includes at least one of the following: indication information of the first wireless communication protocol; an identifier of a source device; or an identifier of a destination device.

In a possible design, the first frame header further includes second information indicating a data type of the target data carried in the first data frame; the second communication module is further configured to: send the second information to the first communication module; and the first communication module is further configured to: after obtaining the target data carried in the first data frame, send the service data to an application layer of the second device when the second information indicates that the data type of the target data is service data; or the first communication module performs a control operation corresponding to the signaling when the second information indicates that the data type of the target data is signaling.

In some wireless communication protocols, when determining that data of a specific data type (for example, signaling) is received, a physical layer of a device may directly perform a corresponding operation, and does not need to sequentially report the data to a higher layer (for example, an application layer). Therefore, according to this design, when obtaining the first data frame, the second device may determine the data type of the target data based on the second information in the second data frame, and may further perform a corresponding operation based on the data. This can finally avoid a delay caused by reporting the data to a higher layer.

In a possible design, the first wireless communication protocol and the second wireless communication protocol are any one of the following:
a Bluetooth BT protocol, a wireless fidelity Wi-Fi protocol, a ZigBee ZigBee protocol, or a SparkLink protocol.

According to a third aspect, an embodiment of this application provides a communication method. The method is applied to a first device, and the method may include the following steps.

The first device encapsulates, according to a first wireless communication protocol, to-be-transmitted target data, to generate a first data frame; the first device encapsulates the first data frame according to a second wireless communication protocol, to generate a second data frame, where the second wireless communication protocol is different from the first wireless communication protocol; and the first device sends the second data frame by using a wireless communication technology corresponding to the second wireless communication protocol.

In a possible design, the first data frame is carried in a payload of the second data frame.

In a possible design, the second data frame includes a first frame header, the first frame header carries first information indicating a transmission channel of the first data frame, and the transmission channel is a transmission channel supporting the first wireless communication protocol.

In a possible design, the first information includes at least one of the following: indication information of the first wireless communication protocol; an identifier of a source device; or an identifier of a destination device.

In a possible design, the first frame header further includes second information indicating a data type of the target data carried in the first data frame.

In a possible design, the first wireless communication protocol and the second wireless communication protocol are any one of the following:
a Bluetooth BT protocol, a wireless fidelity Wi-Fi protocol, a ZigBee ZigBee protocol, or a SparkLink protocol.

According to a fourth aspect, an embodiment of this application provides a communication method. The method is applied to a second device, and the method includes the following steps.

The second device receives a second data frame from a first device by using a wireless communication technology corresponding to a second wireless communication protocol; the second device decapsulates the second data frame according to the second wireless communication protocol, to obtain a first data frame; and the second device decapsulates the first data frame according to a first wireless communication protocol, to obtain target data carried in the first data frame.

In a possible design, the first data frame is carried in a payload of the second data frame.

In a possible design, the second data frame includes a first frame header, the first frame header carries first information indicating a transmission channel of the first data frame, and the transmission channel is a transmission channel supporting the first wireless communication protocol; and the decapsulating the first data frame according to the first wireless communication protocol, to obtain a first data frame includes: decapsulating the first data frame based on the first information according to the first wireless communication protocol, to obtain the first data frame.

In a possible design, the first information includes at least one of the following:
indication information of the first wireless communication protocol; an identifier of a source device; or an identifier of a destination device.

In a possible design, the first frame header further includes second information indicating a data type of the target data carried in the first data frame.

In a possible design, the first wireless communication protocol and the second wireless communication protocol are any one of the following:
a Bluetooth BT protocol, a wireless fidelity Wi-Fi protocol, a ZigBee ZigBee protocol, or a SparkLink protocol.

According to a fifth aspect, an embodiment of this application further provides a communication system. The communication system includes a first device and a second device. The first device is configured to implement the method provided in the third aspect, and the second device is configured to implement the method provided in the fourth aspect.

According to a sixth aspect, an embodiment of this application further provides a computer program. When the computer program is run on a computer, the computer is enabled to perform the method provided in the first aspect.

According to a seventh aspect, an embodiment of this application further provides a computer-readable storage medium. The computer-readable storage medium stores a computer program, and when the computer program is executed by a computer, the computer is enabled to perform the method provided in any one of the foregoing aspects.

According to an eighth aspect, an embodiment of this application further provides a chip. The chip is configured to read a computer program stored in a storage, to perform steps performed by the first communication module/the second communication module in the first aspect or the second aspect. Optionally, the chip may include a processor and the storage. The processor is configured to read the computer program stored in the storage, to perform the steps performed by the first communication module/the second communication module.

According to a ninth aspect, an embodiment of this application further provides a chip system. The chip system includes a first communication module and a second communication module. The first communication module and the second communication module are coupled, and are configured to implement the solution provided in the third aspect or the fourth solution. Optionally, the chip system may further include a processor and a storage.

For technical effect that can be achieved in any one of the third aspect to the ninth aspect, refer to descriptions of technical effect that can be achieved in any one of the possible designs in the first aspect or the second aspect. Details are not described herein again.

### BRIEF DESCRIPTION OF DRAWINGS

FIG. 1 is a diagram of an open system interconnect/reference model and a data transmission process according to an embodiment of this application;
FIG. 2 is a diagram of a Wi-Fi protocol stack according to an embodiment of this application;
FIG. 3 is a diagram of a ZigBee protocol stack according to an embodiment of this application;
FIG. 4 is a diagram of a BT protocol stack according to an embodiment of this application;
FIG. 5 is a diagram of a scenario in which a smartwatch is connected to a smartphone according to an embodiment of this application;
FIG. 6 is a diagram of a communication scenario according to an embodiment of this application;
FIG. 7 is a diagram of a structure of a communication device according to an embodiment of this application;
FIG. 8 is a flowchart of a communication method according to an embodiment of this application;
FIG. 9 is a diagram of a structure of a data frame according to an embodiment of this application;
FIG. 10 is a diagram of instances of structures of a data frame according to an embodiment of this application;
FIG. 11A and FIG. 11B are a flowchart of a communication method according to an embodiment of this application;
FIG. 12 is a flowchart of a communication instance according to an embodiment of this application;
FIG. 13 is a flowchart of another communication instance according to an embodiment of this application;
FIG. 14 is a flowchart of still another communication instance according to an embodiment of this application;
FIG. 15 is a flowchart of yet another communication instance according to an embodiment of this application;
FIG. 16 is a flowchart of yet another communication instance according to an embodiment of this application;
FIG. 17 is a diagram of a structure of a communication apparatus according to an embodiment of this application; and
FIG. 18 is a diagram of a structure of a communication apparatus according to an embodiment of this application.

### DESCRIPTION OF EMBODIMENTS

This application provides a communication method and apparatus, to implement a transmission mechanism that can integrate different wireless communication technologies. The method and apparatus are based on a same technical concept. Because problem-resolving principles of the method and apparatus are similar, mutual reference may be made to implementations of the apparatus and method, and repeated descriptions are not described.

Some terms in this application are described below, to help a person skilled in the art has a better understanding.
(1) A communication device is a device that supports a wireless communication technology and can provide a speech and/or data connectivity for a user. In embodiments of this application, a specific representation form of the communication device is not limited. For example, the communication device may be a terminal device, a network device, a gateway, or the like.

For example, the communication device may be a handheld device or a vehicle-mounted device having a wireless connection function. Currently, some examples of the terminal device are a mobile phone (mobile phone), a tablet computer, a notebook computer, a palmtop computer, a mobile internet device (mobile internet device, MID), a smart sale terminal (point of sale, POS), a wearable device (double ear true wireless stereo (true wireless stereo, TWS) Bluetooth headset), an internet of things (internet of things, IOT) device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and various smart instruments (such as a smart water meter, a smart electricity meter, and a smart gas meter).

(2) A wireless communication protocol is a rule and convention that need be complied with by two communication devices to complete communication or a service. The wireless communication protocol may define a format structure of a data unit (for example, a data frame) carrying to-be-transmitted data, a sending time sequence and a receiving time sequence of the data unit or signaling, and the like. Based on a same wireless communication protocol, the two communication devices may complete data transmission by using a wireless communication technology corresponding to the wireless communication protocol through a corresponding transmission channel.

For example, in embodiments of this application, the wireless communication protocol may include but is not limited to a BT protocol, a Wi-Fi protocol, a ZigBee protocol, or a SparkLink protocol, and may further include a wireless communication protocol evolved based on the foregoing communication technology, wireless communication protocols that have a same or similar function as the foregoing communication protocol and that can replace each other, and the like. This is not limited in this application.

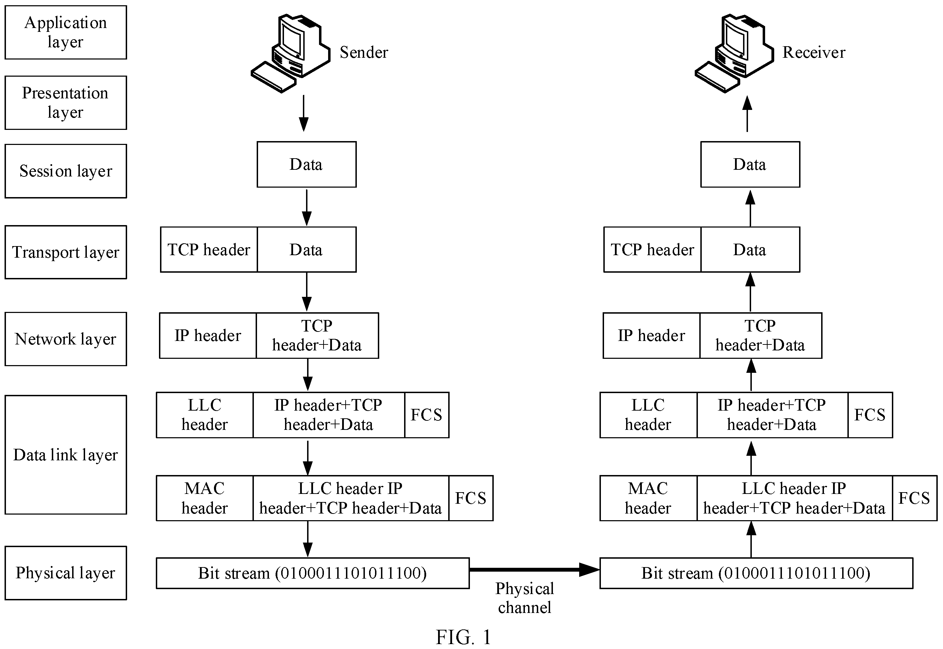

It should be noted that a wireless communication protocol specification generally complies with an open system interconnect/reference model (open system interconnect/reference model, OSI/RM) shown in FIG. 1. Refer to FIG. 1. The OSI/RM may be classified into seven layers from low to high: a physical layer (physical layer), a data link layer (data link layer), a network layer (network layer), a transport layer (transport layer), a session layer (session layer), a presentation layer (presentation layer), and an application layer (application layer). The layers are independent of each other, and a lower layer between two adjacent layers provides a service for a higher layer. The data link layer may be usually classified into two sublayers: a medium access control (medium access control, MAC) layer and a logic link control (logic link control, LLC) layer. Tasks of upper three layers (the application layer, the presentation layer, and the session layer) in the OSI/RM belonging to a communication subnet layer are to process data. Main tasks of lower three layers (the network layer, the data link layer, and the physical layer) belonging to a resource subnet layer are to perform data communication. The transport layer is an interface and a bridge between a communication subnet and a resource subnet, and plays a role of connection. Main tasks of this layer are to provide reliable end-to-end error and traffic control for a user, ensure correct transmission of packets, and shield details of data communication at a lower layer (a layer below the transport layer) from an upper layer (a layer above the transport layer), that is, transparently transmit a packet to the user.

OSI/RM-based layering simplifies a complex data processing and transmission process. As shown in FIG. 1, a sender may perform layer-by-layer encapsulation on data processed at the upper three layers to obtain a data frame, and finally transmit, to a receiver through a physical channel by using the physical layer, a bit stream carrying the data frame. After receiving the bit stream by using the physical layer, the receiver obtains the data frame carried in the bit stream, performs layer-by-layer decapsulation to obtain the data sent by the sender, and then sends the data to the upper three layers for subsequent processing.

Based on a layered structure of the OSI/RM shown in FIG. 1, the following describes layers of various wireless communication protocols by using examples.

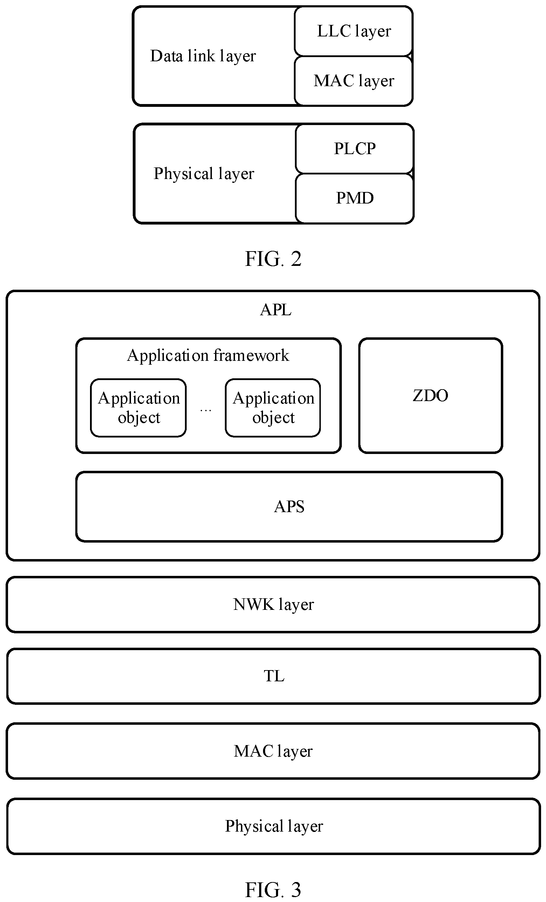

Wi-Fi protocol: The institute of electrical and electronics engineers (institute of electrical and electronics engineers, IEEE) 802.11 protocol is a protocol below the network layer of the OSI/RM. A Wi-Fi protocol stack is shown in FIG. 2.

The data link layer includes the LLC layer and the MAC layer. The LLC layer is responsible for providing services for an upper layer of the data link layer, including transmission reliability assurance and control, data packet segmentation and reassembly, sequential transmission of data packets, and the like. The MAC layer is responsible for encapsulation/decapsulation of a data frame, link management, frame addressing and identification, receiving and sending of a frame, frame error control, and the like.

The physical layer includes a physical layer convergence procedure (physical layer convergence procedure, PLCP) layer and a physical medium dependent (physical medium dependent, PMD) layer. The PLCP layer is responsible for clear channel assessment, carrier sense, channel management, and the like. The PMD layer is responsible for coding and modulation, and transmits each bit element from the PLCP layer to an air interface through an antenna.

ZigBee protocol: As shown in FIG. 3, a ZigBee protocol stack is a physical layer, a MAC layer, a transport layer (transport layer, TL), a network (network, NWK) layer, and an application layer (application layer, APL) from bottom to top. The physical layer and the MAC layer comply with stipulations in the IEEE802.15.4 standard, and other layers are extended by the ZigBee Alliance based on the IEEE802.15.4 standard.

As shown in FIG. 3, the APL includes an application framework (application framework), a ZigBee device object (ZigBee device object, ZDO), and an application support sublayer (application support sublayer, APS). The application framework includes a plurality of application objects (application objects).

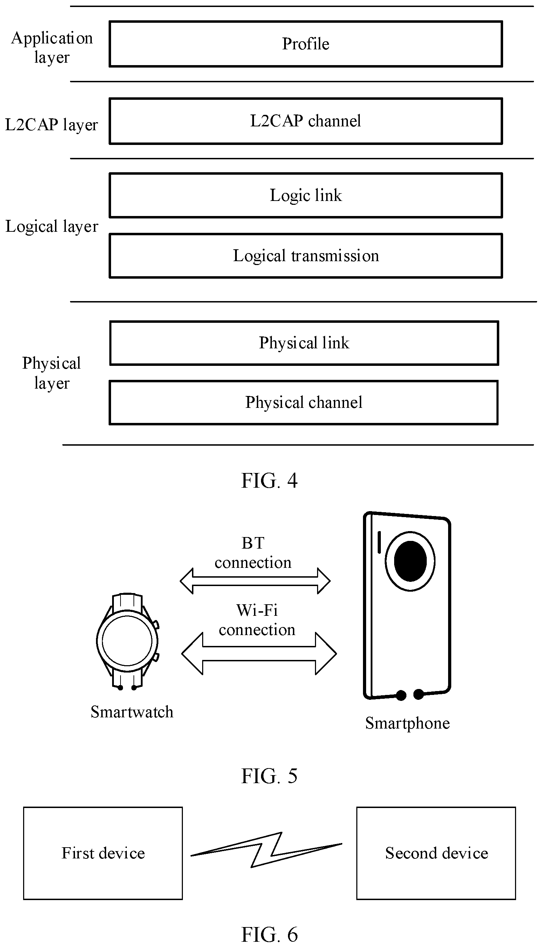

BT protocol: Refer to FIG. 4. ABT protocol stack is classified into four layers: a physical layer, a logical layer (logical layer), a logic link control and adaptation protocol (logic link control and adaptation protocol, L2CAP) layer, and an application layer (app layer).

The physical layer is responsible for providing a physical lane (namely, a physical channel) for data transmission. There may be several different types of channels in a communication system, such as a control channel, a data channel, and a speech channel.

The logical layer provides a logical transmission channel (namely, a logic link) between two or more devices based on the physical layer.

The L2CAP layer is responsible for management of the logic link provided by the logical layer.

The APP layer implements various application functions based on channels provided by an L2CAP. The APP layer includes a profile (profile), and the profile is a concept specific to the BT protocol. To implement interconnection and interworking between different devices on different platforms, the BT protocol not only stipulates a core network specification (Bluetooth core), but also defines various application specifications for various different application scenarios. These application layer specifications may be referred to as BT profiles.

It should be noted that the wireless communication protocols shown in FIG. 2 to FIG. 4 are examples, and do not constitute any limitation on a type of the wireless communication protocol, a layered structure of the protocol, and the like provided in embodiments of this application.

(3) A wireless communication technology is a method and a measure for wirelessly transmitting data from one communication device to another communication device according to a specified communication rule. For example, in embodiments of this application, the wireless communication technology may include but is not limited to a BT technology, a Wi-Fi technology, a ZigBee technology, or a SparkLink technology.

It can be learned from definitions of the wireless communication technology and the wireless communication protocol that the wireless communication technology corresponds to the wireless communication protocol. For example, the BT protocol corresponds to the BT technology, the Wi-Fi protocol corresponds to the Wi-Fi technology, the ZigBee protocol corresponds to the ZigBee technology, and the SparkLink protocol corresponds to the SparkLink technology.

(4) A transmission channel provides a data path for data transmission. The transmission channel may include but is not limited to two communication parties, a communication protocol or a communication technology supported by the transmission channel, a physical channel, a logical channel, or a logic link.

(5) "And/Or" describes an association relationship between associated objects and indicates that three relationships may exist. For example, A and/or B may represent the following three cases: Only A exists, both A and B exist, and only B exists. The character "/" generally indicates an "or" relationship between the associated objects.

It should be noted that "a plurality of" in this application means two or more than two. "At least one" means one or more.

In addition, it should be understood that in the description of this application, terms such as "first" and "second" are merely for distinguishing and description, but should not be understood as indicating or implying relative importance, or should not be understood as indicating or implying a sequence.

The following first briefly describes a current wireless communication technology.

Different wireless communication technologies have different features. For example, a BT technology is featured by a low rate and low power consumption, and a Wi-Fi technology is featured by a high bandwidth and high power consumption. Therefore, different wireless communication technologies may be selected in different scenarios or for specific communication devices.

A communication device (for example, a smart doorbell or a wearable device) with a small battery capacity is used as an example for description. In a standby scenario with low power consumption, the communication device may maintain a basic communication connection to a gateway by using a BT technology (for example, a BLE technology). In an operating mode, the communication device may perform data transmission by using a Wi-Fi technology. However, when entering the operating mode, the communication device needs to first establish a Wi-Fi connection by using the BT technology, and then perform data transmission by using the Wi-Fi technology. A process of establishing the Wi-Fi connection may increase a data transmission delay and reduce user experience.

A scenario in which a smartwatch is connected to a smartphone shown in FIG. 5 is still used as an example for description. In a low-power standby scenario, a communication connection between the smartwatch and the smartphone is usually maintained by using a BT technology. When the smartwatch has a large-traffic data download requirement, the smartwatch selects a Wi-Fi technology for communication, or when the smartwatch needs to transmit fitness and health monitoring data to the smartphone, the smartwatch performs communication by the BT technology. However, due to high transmission power consumption of the Wi-Fi technology, a slow transmission rate of the BT technology, and low power consumption, a weak signal, and high air interface slot occupation often occurred in an actual scenario, data transmission efficiency may be affected or power consumption of the smartwatch may be wasted when the smartwatch communicates with the smartphone in the foregoing manner, and user experience is reduced.

Based on this, to ensure user experience, embodiments of this application provide the communication method and apparatus. In the solutions, a transmitting end may first encapsulate, according to a first wireless communication protocol, to-be-transmitted data, then perform encapsulation according to a second wireless communication protocol, and send, by using a wireless communication technology corresponding to the second wireless communication protocol, a data frame finally obtained through encapsulation. Correspondingly, after receiving the data frame by using the wireless communication technology corresponding to the second wireless communication protocol, a receiving end may first decapsulate the data frame according to the second wireless communication protocol, and then perform decapsulation according to the first wireless communication protocol, to obtain the data sent by the transmitting end. According to the solutions, a communication device can integrate two wireless communication technologies to implement data transmission. This can fully utilize advantages of different wireless communication protocols, and further ensure user experience.

The following describes in detail embodiments of this application with reference to accompanying drawings.

FIG. 6 is a diagram of a communication scenario in which a communication method according to an embodiment of this application is used. Refer to FIG. 6. In this scenario, at least two communication devices (for example, a first device and a second device in FIG. 6) are included. The first device and the second device support a plurality of wireless communication technologies. The first device and the second device may establish a communication connection by using a plurality of wireless communication technologies, to implement communication.

It should be noted that device types of the first device and the second device and network roles of the first device and the second device in a communication system or a communication network are not limited in this application. In addition, the device types or the network roles of the first device and the second device may be the same or different. For example, the first device may be a wearable device, and the second device may be a smartphone. For another example, both the first device and the second device are smartphones. For still another example, the first device may be a terminal device, and the second device is a network device or a gateway.

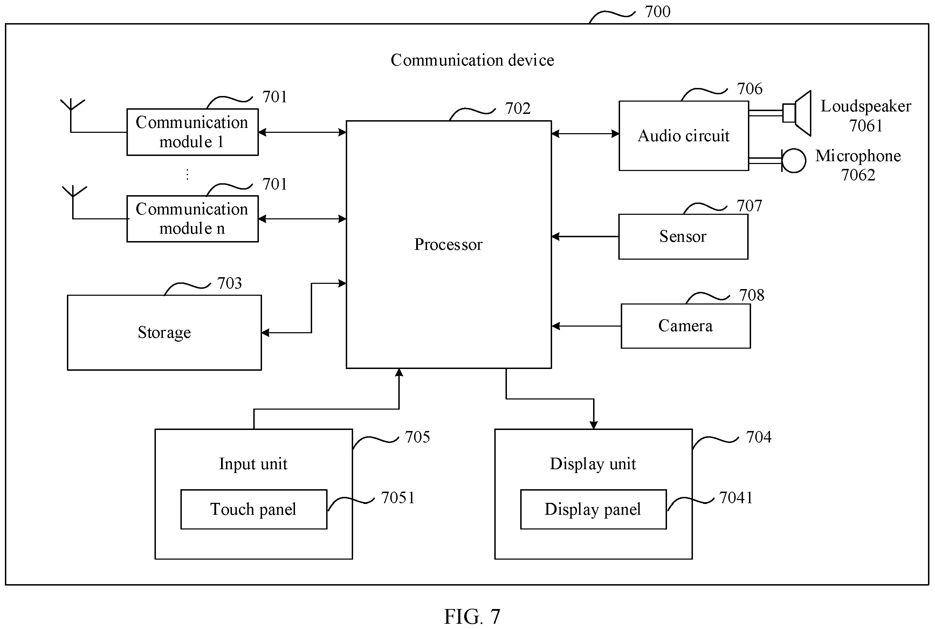

Based on the communication scenario shown in FIG. 6, embodiments of this application further provide a communication device. The following describes a structure of the communication device provided in embodiments of this application. FIG. 7 shows a possible structure of the communication device. Refer to FIG. 7. The communication device 700 includes components such as a plurality of communication modules 701 (for example, a communication module 1 to a communication module n in the figure), a processor 702, a storage 703, a display unit 704, an input unit 705, an audio circuit 706, a sensor 707, and a camera 708.

The plurality of communication modules 701 are configured to implement a wireless communication function of the communication device 700, to implement data communication with another communication device. In embodiments of this application, the communication module 701 may also be referred to as a wireless communication module. Each communication module 701 corresponds to a wireless communication protocol or a wireless communication technology, and the communication device 700 may receive or send data via any communication module 701. In a process in which the communication device 700 receives or sends the data, the communication module 701 may process the data according to a corresponding wireless communication protocol, and receive or send the data by using a corresponding wireless communication technology.

For example, the plurality of communication modules 701 may include a BT module supporting a BT protocol, a Wi-Fi module supporting a Wi-Fi protocol, a ZigBee module supporting a ZigBee protocol, a SparkLink module supporting a SparkLink protocol, or the like.

In embodiments of this application, functions such as data processing and modulation/demodulation may be implemented inside each communication module 701. Therefore, any communication module 701 may integrate at least one of the following components: a baseband processor, a modem processor, an antenna, and the like.

Optionally, each communication module 701 may be a chip supporting one wireless communication protocol. For example, the communication module 701 may be some programmable chips such as a field-programmable gate array (field-programmable gate array, FPGA), a complex programmable logic device (complex programmable logic device, CPLD), an application-specific integrated circuit (application-specific integrated circuits, ASIC), or a system on a chip (System on a chip, SOC).

Optionally, in embodiments of this application, there are at least two communication modules 701 that can communicate with each other in the plurality of communication modules 701. Optionally, any two communication modules 701 may communicate with each other by using a share memory (share RAM) technology or a universal asynchronous receiver/transmitter (universal asynchronous receiver/transmitter) UART protocol.

Optionally, the communication device 700 may further include a mobile communication module. The mobile communication module may provide a mobile communication solution that is applied to the communication device and that includes a 2G/3G/4G/5G or the like. The communication device 700 may establish a wireless connection to a base station in a mobile communication system via the mobile communication module, and receive a service of the mobile communication system via the mobile communication module.

The communication device 700 may further include a communication interface, configured to implement a physical connection between the communication device 700 and another device. The communication interface may be connected to a communication interface of the another device through a cable, to implement data transmission between the communication device 700 and the another device. For example, the communication device 700 may be connected to a device such as a headset or a speaker through the communication interface.

The storage 703 may be configured to store a software program and data. The processor 702 runs the software program and the data that are stored in the storage 703, to perform various functions and data processing of the communication device 700.

Optionally, the storage 703 may mainly include a program storage area and a data storage area. The program storage area may store an operating system, various software programs, and the like. The data storage area may store data input by a user, data created in a process of running the software program by the communication device 700, or the like. The operating system may be HarmonyOS^{®}, iOS^{®}, Android^{®}, Microsoft^{®}, or the like. In addition, the storage 703 may include a high-speed random access memory, and may also include a non-volatile memory, for example, at least one magnetic disk storage device, a flash storage device, or another non-volatile solid-state storage device.

The input unit 705 may be configured to receive character information and a signal that are input by the user. Optionally, the input unit 705 may include a touch panel 7051 and another input device (for example, a function button). The touch panel 7051, also referred to as a touchscreen, may collect a touch operation performed by the user on or near the touch panel, generate corresponding touch information, and send the touch information to the processor 702, to enable the processor 702 to execute a command corresponding to the touch information. The touch panel 7051 may be implemented in a plurality of types such as a resistive type, a capacitive type, an infrared type, and a surface acoustic wave type.

The display unit 704 is configured to present a user interface, to implement man-machine interaction. For example, the display unit 704 may display information input by the user or information provided for the user, content such as various menus, main interfaces (including icons of various applications), windows of the applications, and images shot by a camera of the communication device 700.

The display unit 704 may include a display panel 7041. The display panel 7041 is also referred to as a display, and may be configured in a form of a liquid crystal display (liquid crystal display, LCD), an organic light-emitting diode (organic light-emitting diode, OLED), or the like.

It should be noted that the touch panel 7051 may cover the display panel 7041. In FIG. 7, the touch panel 7051 and the display panel 7041 serve as two independent components to implement input and output functions of the communication device 700. However, in embodiments of this application, the touch panel 7051 and the display panel 7041 may be integrated (that is, a touch display) to implement the input and output functions of the communication device 700.

The processor 702 is a control center of the communication device 700, connects to the components through various interfaces and lines, and runs or executes the software program and/or module stored in the storage 703 and invokes the data stored in the storage 703, to perform various functions of the communication device 700 and process the data, so as to implement a plurality of services of the communication device 700.

Optionally, the processor 702 may include one or more processing units. The processor 702 may integrate an application processor, a graphics processing unit (graphics processing unit, GPU), an image signal processor (image signal processor, ISP), a controller, a calculator, a video codec, a digital signal processor (digital signal processor, DSP), a baseband processor, a neural-network processing unit (neural-network processing unit, NPU), or the like, where the application processor mainly processes an operating system, a user interface, an application, and the like.

Optionally, an internal memory (namely, a memory) may be disposed in any communication module 701 or the processor 702. The memory of the communication module 701 or the processor 702 is configured to store temporary instructions or data in a running process of the communication module 701 or the processor 702, to improve processing efficiency of the communication module 701 or the processor 702.

The audio circuit 706 (including a loudspeaker 7061 and a microphone 7062) may provide an audio interface between the user and the communication device 700. The audio circuit 706 may transmit an electrical signal converted from received audio data to the loudspeaker 7061, and the loudspeaker 7061 converts the electrical signal into a sound signal for output. In addition, the microphone 7062 converts a collected sound signal into an electrical signal, and the audio circuit 706 receives the electrical signal, and then converts the electrical signal into audio data for further processing such as transmission or storage.

The communication device 700 may further include one or more sensors 707, for example, a light sensor, a motion sensor, an ultrasonic sensor, and another sensor. The communication device 700 may implement various functions based on real-time sensor data collected by the sensor 707.

The communication device 700 may further include at least one camera 708, to capture an image of a real scene. When the communication device 700 includes a plurality of cameras 708, the cameras 708 include a front-facing camera located on the front side of the communication device 700, and further include a rear-facing camera located on the rear side of the communication device 700.

Optionally, the communication device 700 may further include a battery, a power supply, a power management system, and the like.

It may be understood by a person skilled in the art that the structure of the communication device 700 shown in FIG. 7 does not constitute a limitation on the communication device to which this application is applicable, and the communication device to which embodiments of this application are applicable may include more or fewer components than those shown in the figure, or combine some components, or have different component arrangements.

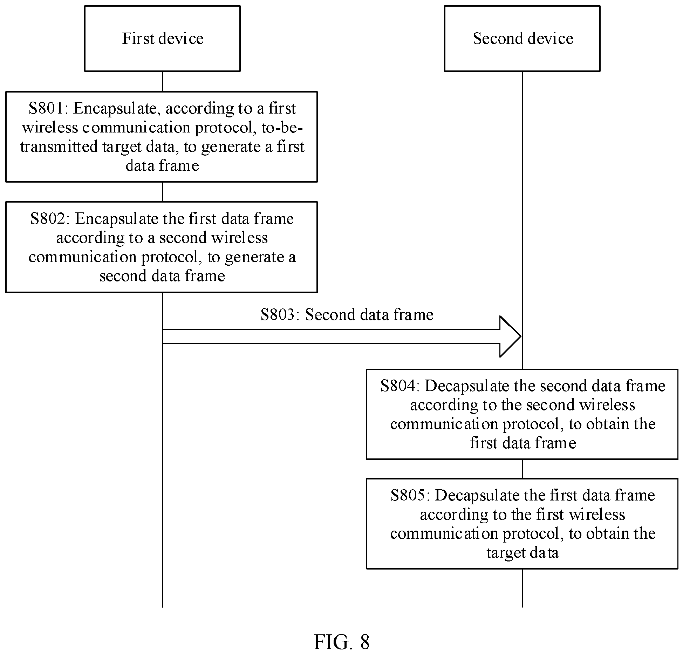

To implement a transmission mechanism that integrates different wireless communication technologies, an embodiment of this application provides a communication method. The method is applied to the communication scenario shown in FIG. 6. Refer to a flowchart shown in FIG. 8, the following uses an example in which a data transmitting end is a first device and a data receiving end is a second device for description.

In this embodiment, the first device (for example, upper three layers in an OSI/RM) inside determines to transmit, according to a first wireless communication protocol, data generated or processed by the first device (namely, data processed at the upper three layers).

S801: The first device encapsulates, according to the first wireless communication protocol, the to-be-transmitted target data, to generate a first data frame.

S802: The first device encapsulates the first data frame according to a second wireless communication protocol, to generate a second data frame, where the second wireless communication protocol is different from the first wireless communication protocol.

For example, the first wireless communication protocol and the second wireless communication protocol are any one of the following:
a Bluetooth BT protocol, a wireless fidelity Wi-Fi protocol, a ZigBee ZigBee protocol, or a SparkLink protocol.

Generally, different wireless communication protocols in a communication device are independent of each other and isolated from each other. To be specific, S801 and S802 are separately performed by different modules in the first device. For example, the first device may include a first communication module supporting the first wireless communication protocol and a second communication module supporting the second wireless communication protocol. The first communication module and the second communication module in the first device may negotiate to send the first data frame to the second communication module for processing and sending. For example, the first communication module and the second communication module may exchange air interface channel information, load information, a data amount of the to-be-transmitted target data, and the like, so that the first communication module or the second communication module can agree, based on the foregoing information, to send the first data frame to the second communication module for transmission.

The first data frame meets a stipulation of a data frame structure in the first wireless communication protocol, and the second data frame meets a stipulation of a data frame structure in the second wireless communication protocol. The first data frame may be carried in a payload (payload) of the second data frame.

To enable a device that receives the second data frame to learn of that the first data frame carried in the second data frame is transmitted through a transmission channel supporting the first wireless communication protocol, the second data frame may further include a first frame header in addition to a frame header stipulated in the second wireless communication protocol. The first frame header is a newly defined frame header. The first frame header may carry first information indicating a transmission channel of the first data frame, and the transmission channel is the transmission channel supporting the first wireless communication protocol.

In an implementation, the first information includes at least one of the following: indication information of the first wireless communication protocol; an identifier of a source device (namely, the first device); or an identifier of a destination device (namely, the second device or another device).

Optionally, when the identifier of the source device or the identifier of the destination device is generated according to the first wireless communication protocol, or there is a correspondence between the identifier of the source device/the identifier of the destination device and the first wireless communication protocol, the first information may not include the indication information of the first wireless communication protocol. In this case, the second device may determine the first wireless communication protocol based on the identifier of the source device or the identifier of the destination device included in the first information.

In an implementation, the first frame header may further include second information indicating a data type of the target data carried in the first data frame. The data type of the target data may be service data or signaling.

In some wireless communication protocols, when determining that data of a specific data type (for example, signaling) is received, a physical layer of a device may directly perform a corresponding operation, and does not need to sequentially report the data to a higher layer (for example, an application layer). Therefore, according to this implementation, when obtaining the first data frame, the second device may determine the data type of the target data based on the second information in the second data frame, and may further perform a corresponding operation based on the data. This can finally avoid a delay caused by reporting the data to a higher layer.

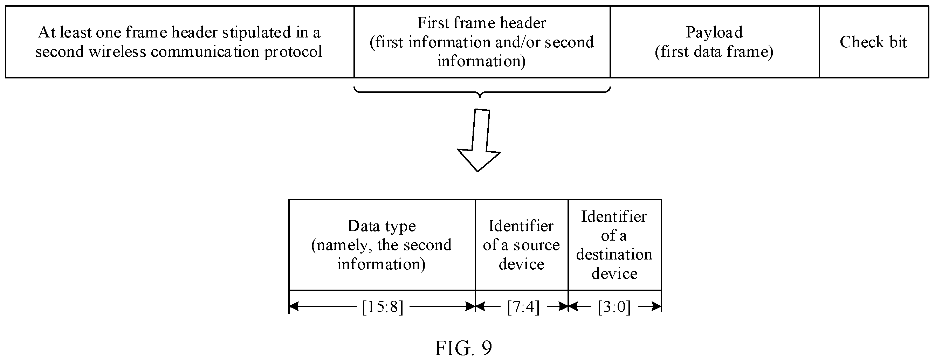

Based on the foregoing descriptions, this embodiment of this application further provides a frame format that can integrate a plurality of wireless communication protocols, as shown in FIG. 9. FIG. 9 is still described by using a scenario provided in this embodiment of this application as an example.

A structure of the second data frame generated by the first device by encapsulating the first data frame according to the second wireless communication protocol is shown in FIG. 9, and is sequentially at least one frame header stipulated in the second wireless communication protocol, the first frame header, the payload, and a check bit from left to right. The first frame header may include the first information and/or the second information. For example, as shown in FIG. 9, the first frame header may include the identifier of the source device, the identifier of the destination device, and the second information indicating the data type of the target data. Optionally, the first frame header may occupy two bytes (bytes). The identifier of the destination device occupies four bits in the first frame header, for example, bits 0 to 3. The identifier of the source device occupies four bits in the first frame header, for example, bits 4 to 7. The second information occupies eight bits in the first frame header, for example, bits 8 to 15.

It should be noted that a name of the first frame header is not limited in this application, and a specific name of the first frame header may be specifically limited based on a specific scenario or a structure of the second wireless communication protocol. For example, the first frame header may be referred to as a transport layer frame header.

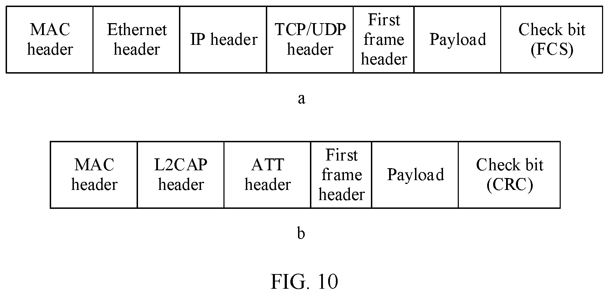

For example, when the second wireless communication protocol is a Wi-Fi protocol, refer to a in FIG. 10. A second data frame header is sequentially a MAC header, an Ethernet (Ethernet) header, an internet protocol (internet protocol, IP) header, a transmission control protocol (transmission control protocol, TCP)/user datagram protocol (user datagram protocol, UDP) header, a first frame header, a payload, and a check bit from left to right. When the second wireless communication protocol is a BT protocol, refer to b in FIG. 10. A second data frame header is sequentially a MAC header, an L2CAP header, an attribute protocol (attribute protocol, ATT) layer header, a first frame header, a payload, and a check bit from left to right.

S803: The first device sends the second data frame by using a wireless communication technology corresponding to the second wireless communication protocol. Correspondingly, the second device receives the second data frame from the first device by using the wireless communication technology corresponding to the second wireless communication protocol.

Optionally, the second communication module that is in the first device and that supports the second wireless communication protocol may perform processing such as modulation and encoding on the second data frame, and transmit a finally generated bit stream to an air interface in a form of an electromagnetic wave signal through an antenna. For a specific process, refer to a process of transmitting data at a physical layer of a communication device in the conventional technology. Details are not described herein.

Correspondingly, after receiving the electromagnetic wave signal through an antenna, a second communication module that is in the second device and that supports the second wireless communication protocol first converts the signal into a bit stream, and then performs processing such as demodulation and decoding on the obtained bit stream to obtain the second data frame. For a specific process, refer to a process of receiving the data at the physical layer of the communication device in the conventional technology. Details are not described herein.

S804: The second device decapsulates the second data frame according to the second wireless communication protocol, to obtain the first data frame.

In this step, the second device may obtain the first data frame carried in the payload of the second data frame.

Optionally, when the first frame header in the second data frame includes the first information indicating the transmission channel of the first data frame, the second device may perform S805 based on the indication of the first information. For example, the second communication module that is in the second device and that supports the second wireless communication protocol may send, based on the indication of the first information, the obtained first data frame to a first communication module that is in the second device and that supports the first wireless communication protocol, so that the first communication module continues to process the first data frame according to the first wireless communication protocol.

S805: The second device decapsulates the first data frame according to the first wireless communication protocol, to obtain the target data carried in the first data frame.

According to this method, when two communication devices need to perform data communication, one wireless communication protocol may be used inside the communication devices to perform data processing, and the other wireless communication protocol may be used between the communication devices to perform data transmission. The method can be used to integrate different wireless communication technologies during data transmission, and implement a transmission mechanism that integrates the different wireless communication technologies. According to this mechanism, the communication device can fully utilize advantages of the different wireless communication technologies and advantages of different wireless communication protocols. This finally ensures user experience.

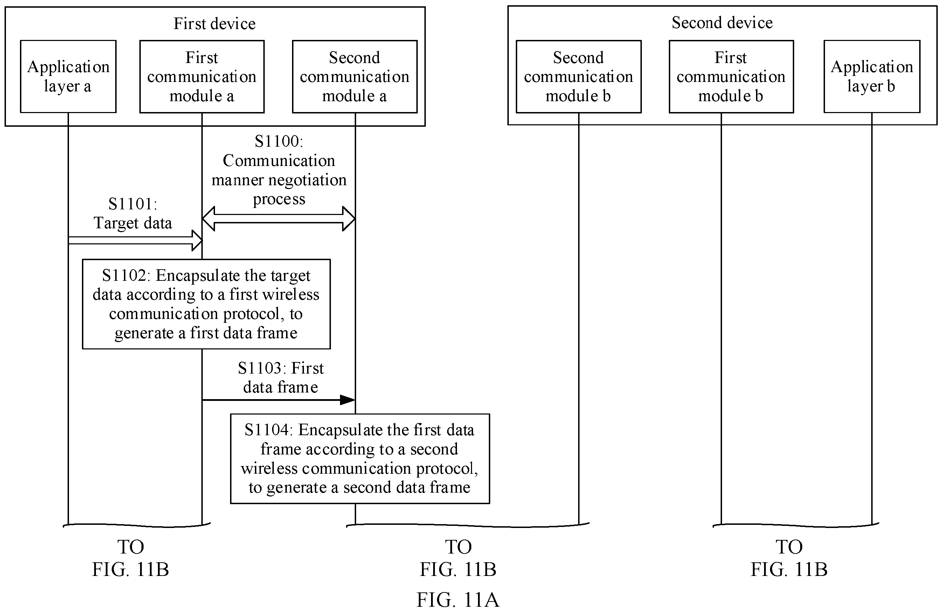

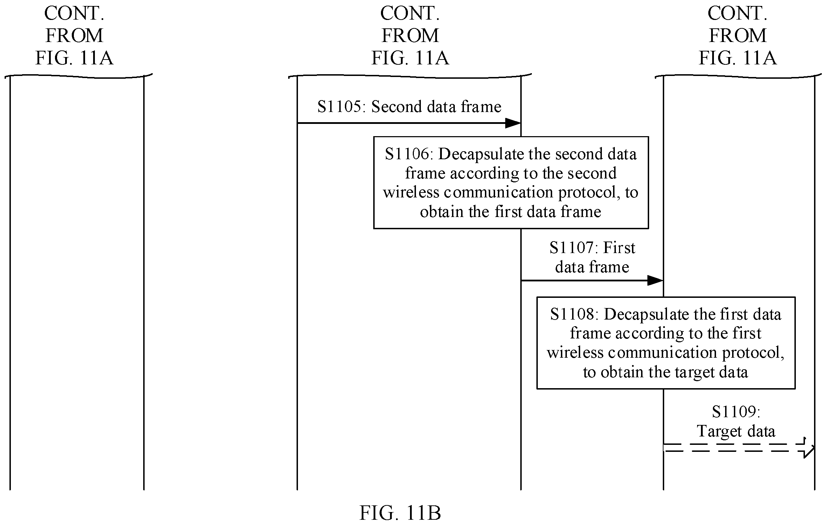

Based on the communication method provided in FIG. 8, this application further provides a communication method. In the method, both a first device and a second device include at least an application layer for service processing, a first communication module supporting a first wireless communication protocol, and a second communication module supporting a second wireless communication protocol. For ease of differentiation, in this embodiment, the application layer of the first device is denoted as an application layer a, the first communication module in the first device is denoted as a first communication module a, the second communication module in the first device is denoted as a second communication module a, the application layer of the second device is denoted as an application layer b, the first communication module in the second device is denoted as a first communication module b, and the second communication module in the second device is denoted as a second communication module b. The following describes a specific procedure of the method in detail with reference to FIG. 11A and FIG. 11B.

It should be noted that a scenario in which this solution is implemented is that the application layer of the first device determines to transmit, according to the first wireless communication protocol, data processed by the application layer of the first device.

S1100: Optionally, the first communication module a and the second communication module a in the first device perform a communication manner negotiation process, determine that a data frame generated by the first communication module a is transmitted by the second communication module a, that is, determine, according to the second wireless communication protocol, to transmit data carried in the first data frame generated by the first communication module.

The first communication module a and the second communication module a can communicate with each other. For example, the first communication module a and the second communication module a may communicate with each other by using a share RAM technology or a UART protocol.

In an implementation, the first communication module a may obtain related information of the second communication module a from the second communication module a, and then determine, based on the related information of the second communication module a and related information of the first communication module a, that the data frame generated by the first communication module a is transmitted by the second communication module a. Finally, the first communication module a may notify the second communication module a of a negotiation result. For example, the first communication module a may obtain, from the second communication module a, channel information corresponding to the second wireless communication protocol or load information of the second communication module a. Then, the first communication module a may determine, based on at least one of the following, that the data frame generated by the first communication module a is transmitted by the second communication module a: the channel information corresponding to the second wireless communication protocol, the load information of the second communication module a, channel information corresponding to the first wireless communication protocol, load information of the first communication module a, a data amount of to-be-transmitted target data, and the like. Any channel information indicates channel quality of an air interface.

In another implementation, the second communication module a may also obtain related information of the first communication module a from the first communication module a, and then determine, based on related information of the second communication module a and the related information of the first communication module a, that the data frame generated by the first communication module a is transmitted by the second communication module a. Finally, the second communication module a may notify the first communication module a of a negotiation result. For a specific process in this implementation, refer to the description in the previous implementation, and details are not described herein again.

It should be noted that the communication manner negotiation process between the first communication module a and the second communication module a is not limited in this application. The first communication module a and the second communication module a may implement the process in another negotiation manner, or may implement the process in another non-negotiation manner.

It should be noted that the first device may perform S1100 at any time before S1103. Execution time of S1100 is not limited in this application either.

S1101: In a process of executing a service, the application layer a generates target data, and sends the target data to the first communication module a.

Optionally, the application layer a may finally send the target data to the first communication module a in a conventional manner through internal processing of a device and cooperation between components. A specific process is not described herein because the solution of this application is not related to the specific process.

S1102: The first communication module a encapsulates the target data according to the first wireless communication protocol, to generate the first data frame.

S1103: The first communication module a sends the first data frame to the second communication module a based on the negotiation result in S1100.

Optionally, the first communication module a may send the first data frame to the second communication module a by using a share RAM technology or a UART protocol. Correspondingly, the second communication module a may obtain the first data frame from the first communication module a by using the share RAM technology or the UART protocol.

S1104: The second communication module a encapsulates the first data frame according to the second wireless communication protocol, to generate a second data frame. The second wireless communication protocol is different from the first wireless communication protocol.

For example, the first wireless communication protocol and the second wireless communication protocol are any one of the following: a Bluetooth BT protocol, a wireless fidelity Wi-Fi protocol, a ZigBee ZigBee protocol, or a SparkLink protocol.

The first data frame may be carried in a payload of the second data frame.

In an implementation, the second data frame includes a first frame header, the first frame header carries first information indicating a transmission channel of the first data frame, and the transmission channel is a transmission channel supporting the first wireless communication protocol. For example, the first information includes at least one of the following: indication information of the first wireless communication protocol; an identifier of a source device; or an identifier of a destination device.

In another implementation, the first frame header may further include second information indicating a data type of the target data carried in the first data frame.

It should be noted that, in this embodiment of this application, for a structure of the second data frame, refer to the descriptions of the second data frame in the embodiment shown in FIG. 8, as shown in FIG. 9 and FIG. 10. Details are not described herein again.

S1105: The second communication module a sends the second data frame by using a wireless communication technology corresponding to the second wireless communication protocol. Correspondingly, the second communication module b in the second device receives the second data frame from the first device by using the wireless communication technology corresponding to the second wireless communication protocol.

S1106: The second communication module b decapsulates the second data frame according to the second wireless communication protocol, to obtain the first data frame.

Optionally, when the second data frame includes the first frame header, and the first frame header includes the first information and/or the second information, the second communication module b may further obtain the first information and the second information when decapsulating the second data frame.

When the first frame header includes the first information, after obtaining the first data frame, the second communication module b may send the first data frame to the first communication module b in the second device based on the first information, so that the first communication module b can decapsulate the first data frame according to the first wireless communication protocol.

When the first frame header further includes the second information, the second communication module b may further send the second information to the first communication module b, so that the first communication module b can perform, based on the data type indicated by the second information, a corresponding operation on the target data carried in the first data frame.

S1107: The second communication module b sends the first data frame to the first communication module b.

Optionally, the second communication module b may send the first data frame to the first communication module b by using the share RAM technology or the UART protocol. Correspondingly, the first communication module b may obtain the first data frame from the second communication module b by using the share RAM technology or the UART protocol.

S1108: The first communication module b decapsulates the first data frame according to the first wireless communication protocol, to obtain the target data carried in the first data frame.

Optionally, when the first communication module b receives the second information from the second communication module b, the second communication module b may send the service data to the application layer b of the second device in S1109 if the second information indicates that the data type of the target data is service data; or if the second information indicates that the data type of the target data is signaling, the first communication module b may directly perform a control operation corresponding to the signaling, and does not need to send the signaling to the application layer b.

According to this method, when two communication devices need to perform data communication, one wireless communication protocol may be used inside the communication devices to perform data processing, and the other wireless communication protocol may be used between the communication devices to perform data transmission. The method can be used to integrate different wireless communication technologies during data transmission, and implement a transmission mechanism that integrates the different wireless communication technologies. According to this mechanism, the communication device can fully utilize advantages of the different wireless communication technologies and advantages of different wireless communication protocols. This finally ensures user experience.

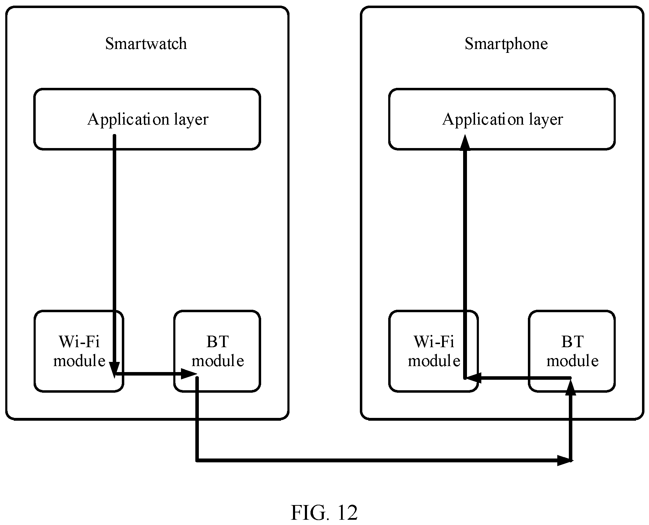

The following describes the communication method provided in embodiments of this application by using the application scenario shown in FIG. 5 as an example. Both the smartwatch and the smartphone support a Wi-Fi technology and a BT technology. As shown in FIG. 12, both the smartwatch and the smartphone include two types of communication modules: a Wi-Fi module and a BT module. Refer to FIG. 12. A data stream transmission process in this instance is as follows.
(1) In a scenario in which an application layer of the smartwatch needs to send data to the smartphone according to a Wi-Fi protocol, after the application layer of the smartwatch generates the target data, the application layer transparently transmits the target data to the Wi-Fi module in the smartwatch. The Wi-Fi module in the smartwatch may encapsulate the target data according to the Wi-Fi protocol, to obtain a first data frame.
(2) The Wi-Fi module in the smartwatch and the BT module in the smartwatch perform communication manner negotiation, and determine to transmit the target data according to a BT protocol. For a specific process of this process, refer to the description in S1100 in the embodiment shown in FIG. 11A. The Wi-Fi module or the BT module in the smartwatch may comprehensively consider factors such as a data amount of the target data, channel information corresponding to the two wireless communication protocols, and load statuses of the two communication modules, and determine a final communication manner. In this embodiment, it is assumed that, to achieve low power consumption and a low delay, a negotiation result of the Wi-Fi module and the BT module is to transmit the target data according to the BT protocol.
(3) The Wi-Fi module in the smartwatch sends the first data frame to the BT module in the smartwatch. The BT module in the smartwatch encapsulates the first data frame according to the BT protocol, to obtain a second data frame including a first frame header.

The first frame header includes first information, and the first information indicates that a transmission channel of the first data frame is a transmission channel supporting the Wi-Fi protocol.

Optionally, the first frame header may further include second information indicating a data type of the target data.

(4) The BT module in the smartwatch sends the second data frame by using the BT technology. A BT connection is maintained between the smartwatch and the smartphone. Therefore, the BT module in the smartphone may receive the second data frame from the smartwatch by using the BT technology.

(5) The BT module in the smartphone may parse the second data frame to obtain the first data frame and the first information in the first frame header. The BT module may send the first data frame to the Wi-Fi module in the smartphone based on the first information obtained through parsing.

When the first frame header in the second data frame further includes the second information, the BT module may further send the second information and the first data frame together to the Wi-Fi module.

(6) After receiving the first data frame, the Wi-Fi module may parse the first data frame to obtain the target data carried in the first data frame. Optionally, the Wi-Fi module may further transparently transmit the target data to an application layer of the smartphone, to implement a service of the smartwatch.

Optionally, when receiving the second information, the Wi-Fi module may determine, based on the data type of the target data indicated by the second information, whether to transparently transmit the target data to the application layer of the smartphone. For example, when the second information indicates that the target data is service data, the Wi-Fi module may transparently transmit the target data to the application layer. For another example, when the second information indicates that the target data is specified signaling (signaling that can be directly executed by the Wi-Fi module), the Wi-Fi module does not need to transparently transmit the target data to the application layer, but directly performs an operation corresponding to the signaling. This improves signaling execution efficiency.

It should be noted that FIG. 12 is merely a diagram of a flow direction of a data stream for ease of description, and does not constitute a limitation on structures of the smartwatch, the smartphone, and the like. For example, another configuration associated with each communication module is further included between the application layer and the communication module inside the smartwatch and the smartphone. For example, a transport layer, a network layer, a Wi-Fi protocol configuration layer, and a Wi-Fi driver may be included between the application layer and the Wi-Fi module.

In this instance, when there is a data communication requirement between the smartwatch and the smartphone, data processing is performed inside the devices according to the Wi-Fi protocol, and data transmission may be performed between devices according to the BT protocol. Therefore, when the two devices notify that the Wi-Fi technology and the BT technology are supported, in a standby scenario with low power consumption, data transmission may be performed between the devices through the BT connection, and a Wi-Fi connection is disconnected. Once data with a small data amount needs to be exchanged between the devices, data receiving and sending may be performed between the devices by using the BT technology, without an operation of establishing the Wi-Fi connection. This greatly shortens a data transmission delay.

In addition, because duration of data transmission between the application layer and the communication module inside the devices is short relative to duration of air interface transmission between the devices, and may be ignored, the Wi-Fi connection does not need to be established between the smartwatch and the smartphone by using the BT technology in the foregoing method. This can significantly reduce the data transmission delay, and reduce Wi-Fi air interface transmission pressure. Because data processing is performed inside the devices by using the Wi-Fi technology, and data transmission is performed between the devices by using the BT technology, the method can fully use advantages of the Wi-Fi technology and the BT technology, and implement effect of low power consumption, a low delay, and a high bandwidth.

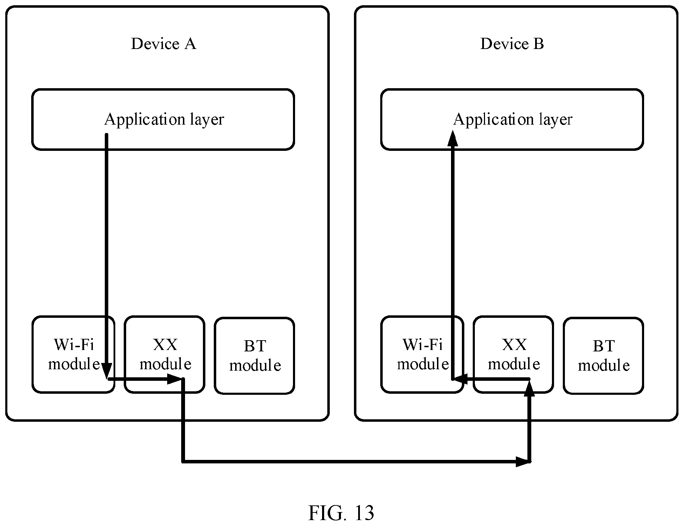

It should be further noted that FIG. 12 is used as an instance, and does not constitute a limitation on a wireless communication protocol to which the communication method provided in embodiments of this application is applicable. The method is applicable to any two wireless communication protocols, as shown in FIG. 13. An XX module may represent that a wireless communication protocol other than the Wi-Fi protocol and the BT protocol is supported. For a data stream transmission process in an instance shown in FIG. 13, refer to the foregoing descriptions of the instance shown in FIG. 12. Details are not described herein again.

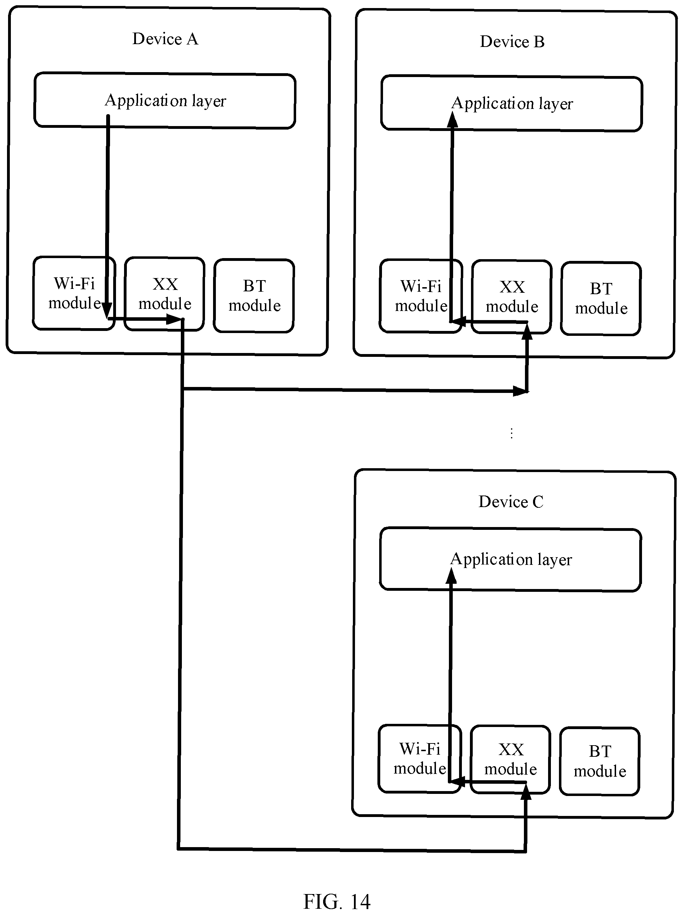

In addition, the foregoing embodiments or instances do not constitute a limitation on an application scenario of the communication method provided in embodiments of this application. The method provided in this application is not only applicable to a point-to-point communication scenario, but also applicable to a point-to-multipoint communication scenario shown in FIG. 14 and a communication scenario supporting a relay technology.

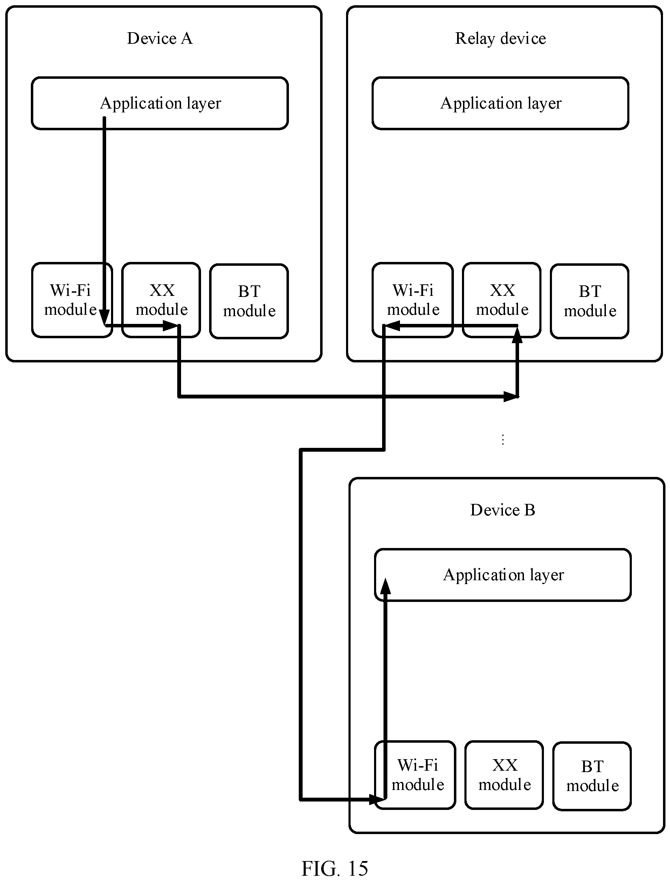

Refer to FIG. 15. In a communication scenario in which there is at least one relay device between a device A and a device B, the device A and a relay device may transmit a second data frame to a relay device by using the method provided in the foregoing embodiment and by using a transmission mechanism that integrates different wireless communication technologies. Different from that in the foregoing method, after an XX module in the relay device parses the second data frame to obtain a first data frame and sends the first data frame to a Wi-Fi module in the relay device, the Wi-Fi module in the relay device may send the first data frame to a next relay device or the device B by using a Wi-Fi technology.

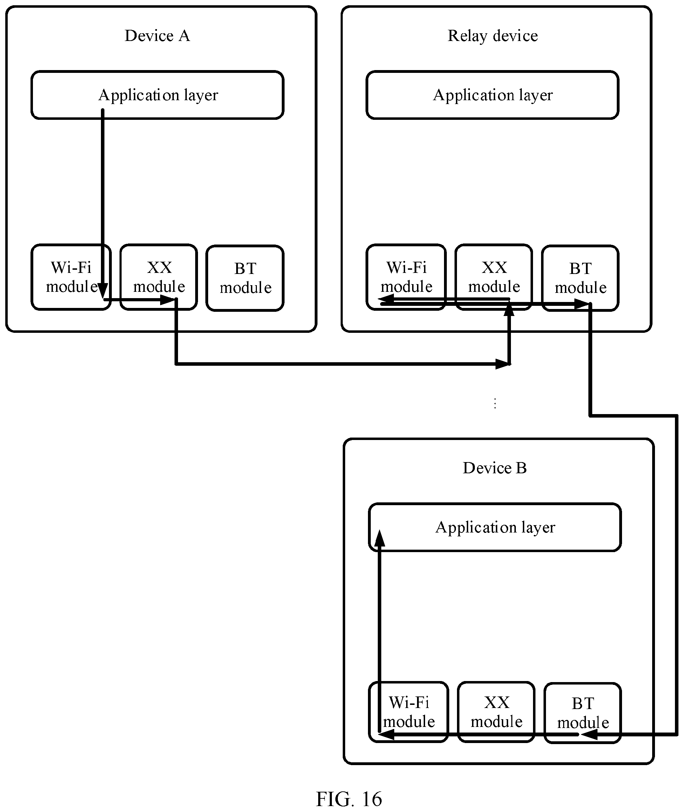

Refer to FIG. 16. In a communication scenario in which there is at least one relay device between a device A and a device B, the device A and a relay device may transmit a second data frame to a relay device by using the method provided in the foregoing embodiment and by using a transmission mechanism that integrates different wireless communication technologies. Different from that in FIG. 15 and the foregoing method, the relay device may further continue to transmit data to a next relay device or the device B by using the transmission mechanism that integrates different wireless communication technologies. As shown in FIG. 16:

After parsing the received second data frame to obtain a first data frame, an XX module in the relay device may send the first data frame to a Wi-Fi module in the relay device.

The Wi-Fi module in the relay device and a BT module in the relay device may perform communication manner negotiation, and determine to transmit the first data frame by using a BT protocol. For a specific process, refer to the description in step (2) in the instance shown in FIG. 12. The Wi-Fi module in the relay device may send the obtained first data frame to the BT module in the relay device.

The BT module in the relay device continues to encapsulate the first data frame into a third data frame according to the BT protocol, and sends the third data frame to the next relay device or the device B.

Finally, after receiving the third data frame, a BT module in the device B may send, to a Wi-Fi module in the device B, the first data frame obtained by parsing the third data frame. The Wi-Fi module in the device B continues to parse the first data frame, to obtain target data from the device A. For a specific process of the device B, refer to the descriptions in the foregoing embodiments or instance. Details are not described herein again.

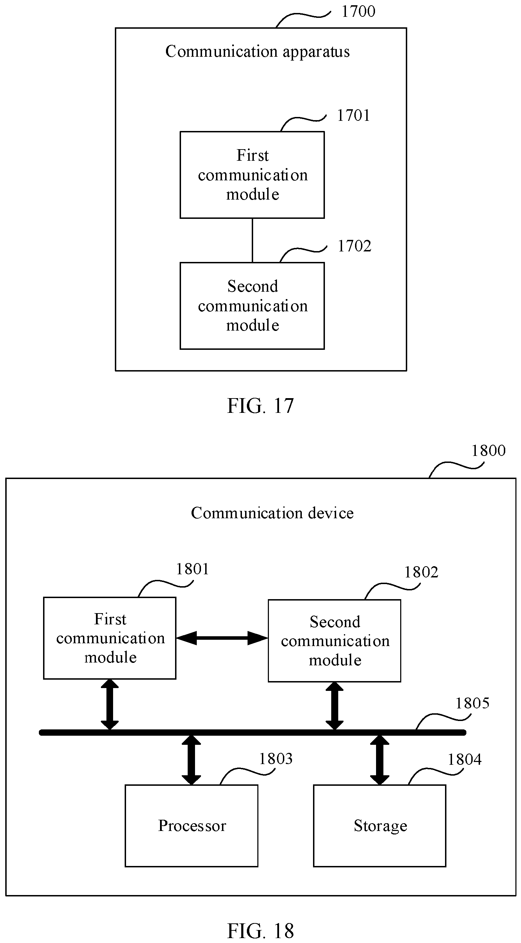

Based on a same technical concept, this application further provides a communication apparatus. The communication apparatus may be used in any communication device in the communication scenario shown in FIG. 6. For a structure of the communication apparatus, refer to a communication apparatus 1700 shown in FIG. 17. The communication apparatus includes a first communication module 1701 and a second communication module 1702.

In a possible implementation, when the communication apparatus is used in the first device in the embodiment shown in FIG. 8 or FIG. 11A and FIG. 11B, functions of the modules are as follows.

The first communication module 1701 is configured to encapsulate, according to a first wireless communication protocol, to-be-transmitted target data, to generate a first data frame; and
the second communication module 1702 is configured to: obtain the first data frame, and encapsulate the first data frame according to a second wireless communication protocol, to generate a second data frame, where the second wireless communication protocol is different from the first wireless communication protocol, and send the second data frame by using a wireless communication technology corresponding to the second wireless communication protocol.

Optionally, the first communication module 1701 is further configured to:
send the first data frame to the second communication module 1702 by using a share memory share RAM technology or a universal asynchronous receiver/transmitter UART protocol, and
when obtaining the first data frame, the second communication module 1702 is specifically configured to:
   obtain the first data frame from the first communication module 1701 by using the share RAM technology or the UART protocol.

Optionally, the first communication module 1701 is further configured to:
determine, based on at least one of the following, to transmit, according to the second wireless communication protocol, the target data carried in the first data frame: channel information corresponding to the first wireless communication protocol, load information of the first communication module 1701, channel information corresponding to the second wireless communication protocol, load information of the second communication module 1702, or a data amount of the target data;
   and/or
the second communication module 1702 is further configured to:
   determine, based on at least one of the following, to transmit, according to the second wireless communication protocol, the target data carried in the first data frame: channel information corresponding to the first wireless communication protocol, load information of the first communication module 1701, channel information corresponding to the second wireless communication protocol, load information of the second communication module 1702, or a data amount of the target data.

Optionally, the first data frame is carried in a payload of the second data frame.

Optionally, the second data frame includes a first frame header, the first frame header carries first information indicating a transmission channel of the first data frame, and the transmission channel is a transmission channel supporting the first wireless communication protocol.

Optionally, the first information includes at least one of the following:
indication information of the first wireless communication protocol; an identifier of a source device; or an identifier of a destination device.

Optionally, the first frame header further includes second information indicating a data type of the target data carried in the first data frame.

Optionally, the first wireless communication protocol and the second wireless communication protocol are any one of the following:
a Bluetooth BT protocol, a wireless fidelity Wi-Fi protocol, a ZigBee ZigBee protocol, or a SparkLink protocol.

In a possible implementation, when the communication apparatus is used in the second device in the embodiment shown in FIG. 8 or FIG. 11A and FIG. 11B, functions of the modules are as follows.

The second communication module 1702 is configured to: receive a second data frame from a first device by using a wireless communication technology corresponding to a second wireless communication protocol; and decapsulate the second data frame according to the second wireless communication protocol, to obtain a first data frame; and
the first communication module 1701 is configured to: obtain the first data frame, and decapsulate the first data frame according to a first wireless communication protocol, to obtain target data carried in the first data frame.

Optionally, the second communication module 1702 is further configured to:
send the first data frame to the first communication module 1701 by using a share memory share RAM technology or a universal asynchronous receiver/transmitter UART protocol; and
when obtaining the first data frame, the first communication module 1701 is specifically configured to:
   obtain the first data frame from the second communication module 1702 by using the share RAM technology or the UART protocol.

Optionally, the first data frame is carried in a payload of the second data frame.

Optionally, the second data frame includes a first frame header, the first frame header carries first information indicating a transmission channel of the first data frame, and the transmission channel is a transmission channel supporting the first wireless communication protocol; and the second communication module 1702 is further configured to:
after obtaining the first data frame, send the first data frame to the first communication module 1701 based on the first information, so that the first communication module 1701 decapsulates the first data frame according to the first wireless communication protocol.

Optionally, the first information includes at least one of the following: indication information of the first wireless communication protocol; an identifier of a source device; or an identifier of a destination device.

Optionally, the first frame header further includes second information indicating a data type of the target data carried in the first data frame; and
the second communication module 1702 is further configured to:
send the second information to the first communication module 1701; and
the first communication module 1701 is further configured to:
   after obtaining the target data carried in the first data frame, send the service data to an application layer of the second device when the second information indicates that the data type of the target data is service data; or the first communication module 1701 performs a control operation corresponding to the signaling when the second information indicates that the data type of the target data is signaling.

Optionally, the first wireless communication protocol and the second wireless communication protocol are any one of the following:
a Bluetooth BT protocol, a wireless fidelity Wi-Fi protocol, a ZigBee ZigBee protocol, or a SparkLink protocol.

It should be understood that a specific process in which the units perform the foregoing corresponding steps is described in detail in the foregoing method embodiments, and for brevity, details are not described herein.

Based on the foregoing embodiments, this application further provides a communication device. The communication device is used in the communication scenario shown in FIG. 6, has a function of the communication apparatus shown in FIG. 17, and is configured to implement the method provided in the foregoing embodiments or instances. Refer to FIG. 18. The communication device 1800 may include a first communication module 1801, a second communication module 1802, and a processor 1803. Optionally, the communication apparatus 1800 may further include a storage 1804. The first communication module 1801, the second communication module 1802, the processor 1803, and the storage 1804 are connected to each other.

Optionally, the first communication module 1801 or the second communication module 1802 may be connected to the processor 1803 and the storage 1804 through a bus 1805. The bus 1805 may be a peripheral component interconnect (peripheral component interconnect, PCI) bus, an extended industry standard architecture (extended industry standard architecture, EISA) bus, and the like. The bus may be classified into an address bus, a data bus, a control bus, and the like. For ease of representation, only one bold line is used to represent the bus in FIG. 18, but this does not mean that there is only one bus or only one type of bus.

The first communication module 1801 and the second communication module 1802 can communicate with each other. Optionally, the two communication modules may communicate with each other by using a share RAM technology or a UART protocol.

The first communication module 1801 is a communication module supporting a first wireless communication protocol, and the second communication module 1802 is a communication module supporting a second wireless communication protocol. The first wireless communication protocol is different from the second wireless communication protocol, and the first wireless communication protocol and the second wireless communication protocol are any one of the following: a Bluetooth BT protocol, a wireless fidelity Wi-Fi protocol, a ZigBee ZigBee protocol, or a SparkLink protocol. Optionally, the first communication module 1801 and the second communication module 1802 may be chips supporting different wireless communication protocols.

In an implementation, when the communication device 1800 is the first device in the embodiment shown in FIG. 8 or FIG. 11A and FIG. 11B, the first communication module 1801 is configured to encapsulate, according to a first wireless communication protocol, to-be-transmitted target data, to generate a first data frame; and
the second communication module 1802 is configured to: obtain the first data frame, and encapsulate the first data frame according to a second wireless communication protocol, to generate a second data frame, where the second wireless communication protocol is different from the first wireless communication protocol; and send the second data frame by using a wireless communication technology corresponding to the second wireless communication protocol.

In another implementation, when the communication device 1800 is the second device in the embodiment shown in FIG. 8 or FIG. 11A and FIG. 11B, the second communication module 1802 is configured to receive a second data frame from a first device by using a wireless communication technology corresponding to a second wireless communication protocol; and decapsulate the second data frame according to the second wireless communication protocol, to obtain a first data frame; and
the first communication module 1801 is configured to: obtain the first data frame, and decapsulate the first data frame according to a first wireless communication protocol, to obtain target data carried in the first data frame.

For specific functions of the first communication module 1801 and the second communication module 1802, refer to the descriptions in the foregoing embodiments. Details are not described herein again.

The processor 1803 is configured to implement functions of the communication device 1800, including an application layer, a session layer, a transport layer, a network layer, and the like, and run an operating system of the communication device 1800. Optionally, the processor 1803 may include a central processing unit (central processing unit, CPU), a network processor (network processor, NP), a GPU, an ISP, an NPU, a combination of at least one of the foregoing processors, or the like. The processor 602 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The storage 1804 is configured to store program instructions, data, and the like. Specifically, the program instructions may include program code, and the program code includes computer operation instructions. The storage 1804 may include a random access memory (random access memory, RAM), or may include a non-volatile memory (non-volatile memory) like at least one magnetic disk storage. The processor 1803 executes the program instructions stored in the storage 1804, to implement a function of the communication device 1800.

Based on the foregoing embodiments, an embodiment of this application further provides a communication system. The communication system includes a first device and a second device. The first device is configured to implement functions of the first device in the embodiment shown in FIG. 8 or FIG. 11A and FIG. 11B. The second device is configured to implement a function of the second device in the embodiment shown in FIG. 8 or FIG. 11A and FIG. 11B.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program. When the computer program is run on a computer, the computer is enabled to perform the method provided in the foregoing embodiment.

The storage medium may be any usable medium that can be accessed by the computer. By way of example, and not limitation. The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by the computer.

Based on the foregoing embodiments, an embodiment of this application further provides a chip. The chip is configured to read a computer program stored in a storage, to implement the steps performed by the first communication module or the second communication module in the foregoing embodiments.

Based on the foregoing embodiments, an embodiment of this application provides a chip system. The chip system includes a first communication module and a second communication module. The first communication module is coupled to the second communication module, to implement the method provided in the foregoing embodiments.

In conclusion, embodiments of this application provide the communication method and apparatus. In the solutions, the transmitting end may first encapsulate, according to the first wireless communication protocol, the to-be-transmitted data, then perform encapsulation according to the second wireless communication protocol, and send, by using the wireless communication technology corresponding to the second wireless communication protocol, the data frame finally obtained through encapsulation. Correspondingly, after receiving the data frame by using the wireless communication technology corresponding to the second wireless communication protocol, the receiving end may first decapsulate the data frame according to the second wireless communication protocol, and then perform decapsulation according to the first wireless communication protocol, to obtain the data sent by the transmitting end. According to the solutions, the communication device can integrate two wireless communication technologies to implement data transmission. This can fully utilize advantages of different wireless communication protocols, and further ensure user experience.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk storage, a CD-ROM, and an optical storage) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable storage that can instruct the computer or any other programmable data processing device to work in a specific manner, so that the instructions stored in the computer-readable storage generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication apparatus, used in a first device, wherein the apparatus comprises:
a first communication module, configured to encapsulate, according to a first wireless communication protocol, to-be-transmitted target data, to generate a first data frame; and
a second communication module, configured to: obtain the first data frame, and encapsulate the first data frame according to a second wireless communication protocol, to generate a second data frame, wherein the second wireless communication protocol is different from the first wireless communication protocol; and send the second data frame by using a wireless communication technology corresponding to the second wireless communication protocol.

2. The apparatus according to claim 1, wherein the first communication module is further configured to:
send the first data frame to the second communication module by using a share memory share RAM technology or a universal asynchronous receiver/transmitter UART protocol; and
when obtaining the first data frame, the second communication module is specifically configured to:
obtain the first data frame from the first communication module by using the share RAM technology or the UART protocol.

3. The apparatus according to claim 1 or 2, wherein the first communication module is further configured to:
determine, based on at least one of the following, to transmit, according to the second wireless communication protocol, the target data carried in the first data frame: channel information corresponding to the first wireless communication protocol, load information of the first communication module, channel information corresponding to the second wireless communication protocol, load information of the second communication module, or a data amount of the target data;
and/or
the second communication module is further configured to:
determine, based on at least one of the following, to transmit, according to the second wireless communication protocol, the target data carried in the first data frame: channel information corresponding to the first wireless communication protocol, load information of the first communication module, channel information corresponding to the second wireless communication protocol, load information of the second communication module, or a data amount of the target data.

4. The apparatus according to any one of claims 1 to 3, wherein the first data frame is carried in a payload of the second data frame.

5. The apparatus according to any one of claims 1 to 4, wherein the second data frame comprises a first frame header, the first frame header carries first information indicating a transmission channel of the first data frame, and the transmission channel is a transmission channel supporting the first wireless communication protocol.

6. The apparatus according to claim 5, wherein the first information comprises at least one of the following:
indication information of the first wireless communication protocol;
an identifier of a source device; or
an identifier of a destination device.

7. The apparatus according to claim 5 or 6, wherein the first frame header further comprises second information indicating a data type of the target data carried in the first data frame.

8. The apparatus according to any one of claims 1 to 7, wherein the first wireless communication protocol and the second wireless communication protocol are any one of the following:
a Bluetooth BT protocol, a wireless fidelity Wi-Fi protocol, a ZigBee ZigBee protocol, or a SparkLink protocol.

9. A communication apparatus, used in a second device, wherein the apparatus comprises:
a second communication module, configured to: receive a second data frame from a first device by using a wireless communication technology corresponding to a second wireless communication protocol; and decapsulate the second data frame according to the second wireless communication protocol, to obtain a first data frame; and
a first communication module, configured to: obtain the first data frame, and decapsulate the first data frame according to a first wireless communication protocol, to obtain target data carried in the first data frame.

10. The apparatus according to claim 9, wherein the second communication module is further configured to:
send the first data frame to the first communication module by using a share memory share RAM technology or a universal asynchronous receiver/transmitter UART protocol; and
when obtaining the first data frame, the first communication module is specifically configured to:
obtain the first data frame from the second communication module by using the share RAM technology or the UART protocol.

11. The apparatus according to claim 9 or 10, wherein the first data frame is carried in a payload of the second data frame.

12. The apparatus according to any one of claims 9 to 11, wherein the second data frame comprises a first frame header, the first frame header carries first information indicating a transmission channel of the first data frame, and the transmission channel is a transmission channel supporting the first wireless communication protocol; and the second communication module is further configured to:
after obtaining the first data frame, send the first data frame to the first communication module based on the first information, so that the first communication module decapsulates the first data frame according to the first wireless communication protocol.

13. The apparatus according to claim 12, wherein the first information comprises at least one of the following:
indication information of the first wireless communication protocol;
an identifier of a source device; or
an identifier of a destination device.

14. The apparatus according to claim 12 or 13, wherein the first frame header further comprises second information indicating a data type of the target data carried in the first data frame;
the second communication module is further configured to:
send the second information to the first communication module; and
the first communication module is further configured to:
after obtaining the target data carried in the first data frame, send the service data to an application layer of the second device when the second information indicates that the data type of the target data is service data; or the first communication module performs a control operation corresponding to the signaling when the second information indicates that the data type of the target data is signaling.

15. The apparatus according to any one of claims 9 to 14, wherein the first wireless communication protocol and the second wireless communication protocol are any one of the following:
a Bluetooth BT protocol, a wireless fidelity Wi-Fi protocol, a ZigBee ZigBee protocol, or a SparkLink protocol.

16. A communication method, applied to a first device, wherein the method comprises:
encapsulating, according to a first wireless communication protocol, to-be-transmitted target data, to generate a first data frame;
encapsulating the first data frame according to a second wireless communication protocol, to generate a second data frame, wherein the second wireless communication protocol is different from the first wireless communication protocol; and
sending the second data frame by using a wireless communication technology corresponding to the second wireless communication protocol.

17. The method according to claim 16, wherein the first data frame is carried in a payload of the second data frame.

18. The method according to claim 16 or 17, wherein the second data frame comprises a first frame header, the first frame header carries first information indicating a transmission channel of the first data frame, and the transmission channel is a transmission channel supporting the first wireless communication protocol.

19. The method according to claim 18, wherein the first information comprises at least one of the following:
indication information of the first wireless communication protocol;
an identifier of a source device; or
an identifier of a destination device.

20. The method according to claim 18 or 19, wherein the first frame header further comprises second information indicating a data type of the target data carried in the first data frame.

21. The method according to any one of claims 16 to 20, wherein the first wireless communication protocol and the second wireless communication protocol are any one of the following:
a Bluetooth BT protocol, a wireless fidelity Wi-Fi protocol, a ZigBee ZigBee protocol, or a SparkLink protocol.

22. A communication method, applied to a second device, wherein the method comprises:
receiving a second data frame from a first device by using a wireless communication technology corresponding to a second wireless communication protocol;
decapsulating the second data frame according to the second wireless communication protocol, to obtain a first data frame; and
decapsulating the first data frame according to a first wireless communication protocol, to obtain target data carried in the first data frame.

23. The method according to claim 22, wherein the first data frame is carried in a payload of the second data frame.

24. The method according to claim 22 or 23, wherein the second data frame comprises a first frame header, the first frame header carries first information indicating a transmission channel of the first data frame, and the transmission channel is a transmission channel supporting the first wireless communication protocol; and
the decapsulating the first data frame according to the first wireless communication protocol, to obtain a first data frame comprises:
decapsulating the first data frame based on the first information according to the first wireless communication protocol, to obtain the first data frame.

25. The method according to claim 24, wherein the first information comprises at least one of the following:
indication information of the first wireless communication protocol;
an identifier of a source device; or
an identifier of a destination device.

26. The method according to claim 24 or 25, wherein the first frame header further comprises second information indicating a data type of the target data carried in the first data frame.

27. The method according to any one of claims 22 to 26, wherein the first wireless communication protocol and the second wireless communication protocol are any one of the following:
a Bluetooth BT protocol, a wireless fidelity Wi-Fi protocol, a ZigBee ZigBee protocol, or a SparkLink protocol.

28. A communication system, comprising a first device and a second device, wherein
the first device is configured to implement the method according to any one of claims 16 to 21; and
the second device is configured to implement the method according to any one of claims 22 to 27.

29. A chip system, wherein the chip system comprises a first communication module and a second communication module, and the first communication module is coupled to the second communication module, to perform the methods according to any one of claims 16 to 27.
